# EUROPÄISCHE PATENTANMELDUNG

(11) **EP 1 041 297 A2**
(43) Veröffentlichungstag der Anmeldung: **04.10.2000**
(21) Anmeldenummer: 00106817.0
(22) Anmeldetag: 30.03.2000
(51) Int. Cl.: F16B 12/24

(54) **Montageelement**

(30) Priorität: 01.04.1999 DE 19915119; 21.10.1999 DE 19950745
(71) Anmelder: Karl Simon GmbH & Co. KG, 78733 Aichhalden (DE)
(72) Erfinder: Bantle, Ulrich, 72186 Empfingen (DE)
(74) Vertreter: Fleck, Hermann-Josef, Dr.-Ing.

(57) **Zusammenfassung**

Die Erfindung betrifft ein Montageelement mit einem Verbindungszapfen (10) und einer Befestigungshülse (20), wobei die Befestigungshülse in einer Bohrung (50) eines Werkstückes (50) festlegbar ist. Damit das Montageelement zuverlässig und sicher montiert werden kann, ist es erfindungsgemäss vorgesehen, dass der Verbindungszapfen in einer Aufnahme der Befestigungshülse in einer Vorsteck-Position gehalten ist, dass der Verbindungszapfen einen Anschlag (14) aufweist, der in der Vorsteck-Position an einem Absatz (32) der Befestigungshülse anliegt und an diesem in Richtung der Einschiebebewegung des Verbindungszapfens in die Befestigungshülse formschlüssig anliegt, und dass der Verbindungszapfen und/oder die Befefestigungshülse eine Auslösevorrichtung aufweist, mittels der die formschlüssige Verbindung zwischen dem Verbindungszapfen und der Befestigungshülse aufhebbar ist.

## Beschreibung

Die Erfindung betrifft ein Montageelement mit einem Verbindungszapfen und einer Befestigungshülse, wobei die Befestigungshülse in einer Bohrung eines Werkstückes festlegbar ist.

Aus dem Stand der Technik sind verschiedene Montageelemente bekannt. Beispielsweise werden im Möbelbau Montageelemente zum Verbinden von Möbelteilen oder zum Anbringen von Möbelbeschlagteilen an einem Möbelteil benötigt. Dabei ist die Bohrung des Möbelteiles oft als Sacklochbohrung ausgebildet und das Montageelement ist zweiteilig. Ein Teil des Montageelementes, nämlich die Befestigungshülse wird in die Sacklochbohrung eingesetzt. Als Befestigungshülse wird üblicherweise ein Dübel verwendet. In die Befestigungshülse kann dann zur Anbindung eines Bauteiles ein Verbindungszapfen eingesetzt werden.

Es ist Aufgabe der Erfindung, ein Montageelement zu schaffen, das einfach und zuverlässig montiert werden kann.

Diese Aufgabe der Erfindung wird dadurch gelöst, dass der Verbindungszapfen in einer Aufnahme der Befestigungshülse in einer Vorsteck-Position gehalten ist, dass der Verbindungszapfen einen Anschlag aufweist, der in der Vorsteck-Position an einem Absatz der Befestigungshülse anliegt und an diesem in Richtung der Einschiebebewegung des Verbindungszapfens in die Befestigungshülse formschlüssig anliegt, und dass der Verbindungszapfen und/oder die Befefestigungshülse eine Auslösevorrichtung aufweist, mittels der die formschlüssige Verbindung zwischen dem Verbindungszapfen und der Befestigungshülse aufhebbar ist.

Diese Montageelemente kommen in einer vormontierten Stellung zur Verwendung. Die Verbindung zwischen der Befestigungshülse und dem Verbindungszapfen, die über den Anschlag und den Absatz bewerkstelligt wird, verhindert, dass der Verbindungszapfen unbeabsichtigt in die Befestigungshülse eingeschoben werden kann. Die Verstellung des Verbindungszapfens gegenüber der Befestigungshülse wird erst dann möglich, wenn die Auslösevorrichtung betätigt wird.

Bevorzugterweise ist es vorgesehen, dass der Anschlag des Verbindungszapfens formschlüssig an dem Absatz der Befestigungshülse gehalten ist.

Eine mögliche Erfindungsvariante zeichnet sich dadurch aus, dass die Befestigungshülse im Bereich des dem vorgesteckten Verbindungszapfen abgekehrten freien Ende wenigstens zwei abgeteilte Halteschenkel aufweist, die in der Vorsteck-Position auseinandergespreizt sind, und dass die Halteschenkel im Bereich ihrer freien Enden mit einer Auflaufschräge versehen sind. Wenn die Befestigungshülse in die Bohrung des Werkstückes eingefügt wird, so gleiten die Auflaufschrägen beispielsweise am Bohrungseintritt auf, wodurch die Halteschenkel aufeinanderzubewegt werden. Diese Verstellung der Halteschenkel kann dann genutzt werden, um die Verbindung zwischen dem Anschlag des Verbindungszapfens und dem Absatz der Befestigungshülse aufzuheben.

Hierbei kann es insbesondere vorgesehen sein, dass die Halteschenkel um virtuelle Drehpunkte aus ihrer Vorsteck-Position in eine Stellposition verschwenkbar sind, wobei die Verbindung zwischen der Befestigungshülse und dem Verbindungszapfen in der Stellposition aufgehoben ist.

Wenn vorgesehen ist, dass die Befestigungshülse ein Spannelement aufweist, das die Befestigungshülse mit ihrem Absatz gegen den Anschlag des Verbindungszapfens verspannt, dann wird eine weitere Sicherheit gegen ein unbeabsichtigtes Lösen der Verbindung zwischen Verbindungszapfen und Befestigungshülse geboten.

Hierbei kann das Montageelement auch inbesondere dergestalt sein, dass die Befestigungshülse zumindest bereichsweise mit einem Längsschlitz versehen ist, dass der Längsschlitz mittels des Spannelementes überbrückt ist, und dass das Spannelement quer zur Längserstreckung des Längsschlitzes dehn- oder verstellbar ist. Das Spannelement kann dabei einteilig mit der Befestigungshülse verbunden, beispielsweise angespritzt sein.

Eine bevorzugte Erfindungsausgestaltung sieht vor, dass der Verbindungszapfen bei aufgehobener formschlüssiger Verbindung zwischen Verbindungszapfen und Befestigungshülse (Absatz des Verbindungszapfens und Anschlag der Befestigungshülse) an einer Formfläche der Befestigungshülse gehalten ist, wobei die an der Formfläche erzeugte Haltekraft grösser ist, als die zum Einsetzen der Befestigungshülse in die Bohrung des Werkstückes erforderliche Fügekraft. Diese Massnahme stellt sicher, dass der Verbindungszapfen nicht in die Befestigungshülse eingedrückt werden kann, bevor diese vollständig in die Bohrung des Werkstückes eingesetzt ist.

Aus Gründen der Fertigungsvereinfachung kann der Verbindungszapfen beispielsweise einstückig an ein mit dem Werkstück zu verbindendes Befestigungsteil angeformt sein. Damit wird eine Einheit geschaffen, die sich insbesondere auch automatisiert mit dem Werkstück verbinden lässt.

Ein mögliches erfindungsgemässes Montageelement kann dadurch gekennzeichnet sein, dass die Befestigungshülse an ihrem dem Befestigungsteil zugewandten Endbereich ein Federelement aufweist, das gegen eine Anlagefläche des Befestigungsteiles in Achsrichtung des eingedrückten Verbindungszapfen verspannt ist. Das Federelement gleicht ein eventuell zwischen Verbindungszapfen und Befestigungshülse vorhandenes Spiel aus.

Wenn vorgesehen ist, dass die Befestigungshülse einen Passbund aufweist, dessen Aussendurchmesser gegenüber dem Innendurchmesser der Bohrung ein Übermass aufweist, dass die Befestigungshülse im Bereich ihres Passbundes an der Bohrung radial nach innen verformbar ist, und dass der in der Aufnahme der Befestigungshülse eingesteckte Verbindungszapfen im Bereich des Passbundes infolge der Verformung der Befestigungshülse geklemmt gehalten ist, so wird eine wackelfreie Verspannung des Verbindungszapfens möglich.

Die Erfindung wird im Folgenden anhand eines in den Zeichnungen dargestellten Ausführungsbeipieles näher erläutert. Es zeigen:
- Fig. 1: einen Verbindungszapfen in Seitenansicht und im Schnitt,
- Fig. 2: eine Befestigungshülse in Seitenansicht,
- Fig. 3: eine aus Befestigungshülse, Verbindungszapfen und Befestigungsteil bestehende Einheit zur Montage an einem Werkstück in Seitenansicht und im Schnitt,
- Fig. 4: die Darstellung gemäss Fig. 3 jedoch im teilmontierten Zustand und
- Fig. 5: die Darstellung gemäss Fig. 3 jedoch in vollständig montierten Zustand.

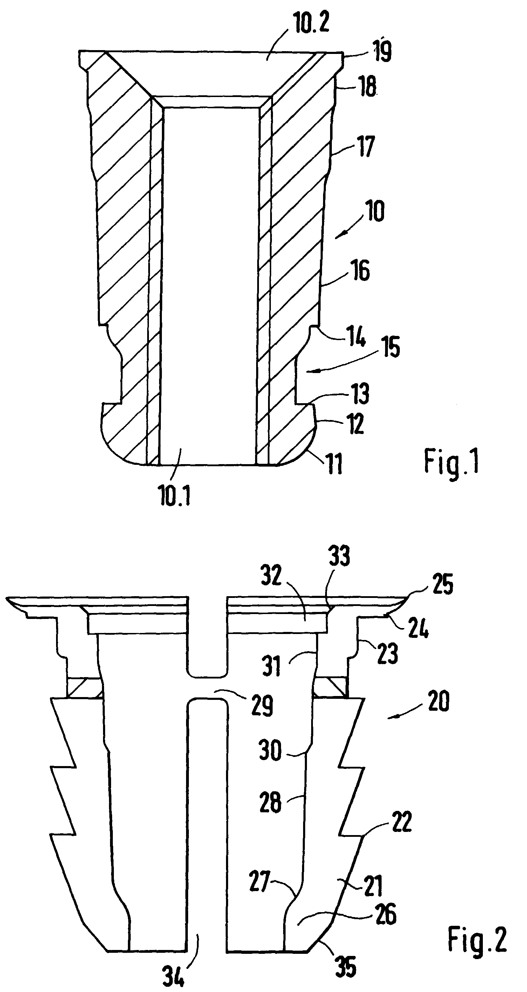

In der Fig. 1 ist ein Verbindungszapfen 10 gezeigt, der als rotationssymmetrisches Bauteil aus einem Kunststoff (beispielsweise als Spritzgussteil) gefertigt sein kann. Der Verbindungszapfen 10 ist von einer zentrischen Befestigungsaufnahme 10.1 durchsetzt, die im vorliegenden Ausführungsbeispiel als Gewinde ausgebildet ist. Die Befestigungsaufnahme 10.1 kann aber auch eine Bohrung sein, in die eine gewindeformende oder selbstschneidende Schraube eingedreht werden kann. Die Befestigungsaufnahme 10.1 läuft in einer konischen Erweiterung 10.2 aus. Diese ermöglicht ein vereinfachtes Einführen der Schraube in die Befestigungsaufnahme 10.1. Gleichzeitig kann diese Erweiterung 10.2 auch zur Aufnahme des Senkkopfes einer Befestigungsschraube dienen. Dies ist dann notwendig, wenn beispielsweise ein dünnes Blech mit dem Verbindungszapfen verschraubt ist, wobei die Blechstärke allein nicht zur Aufnahme des Senkkopfes ausreicht. An dem der Erweiterung 10.2 zugewandten Endbereich besitzt der Verbindungszapfen 10 ein zylindrisches Endstück 19, das in einem umlaufenden Bund 18 übergeleitet ist. Der Bund 18 ist gegenüber dem Endstück 19 unter Bildung eines Absatzes durchmesserveringert ausgebildet. An den Bund 18 schliesst sich eine, ebenfalls durchmesserveringerte Stufe 17 an. Die Stufe 17 ist in eine Gleitfläche 16 übergeleitet. Die Gleitfläche 16 läuft an ihrem, der Erweiterung 10.2 abgewandten Ende in einer Rastnut 15 aus. Die Rastnut 15 besitzt einen Anschlag 14, der direkt an die Gleitfäche 16 angeschlossen ist. Die von dem Anschlag 14 gebildete Anschlagfläche steht im rechten Winkel oder annähernd im rechten Winkel zu der Gleitfläche 16. Auf der dem Anschlag 14 gegenüberliegenden Seite der Rastnut 15 ist eine steile Rastflanke 13 vorgesehen. Im Anschluss an die Rastflanke 13 weist der Verbindungszapfen 10 ein zylindrisches oder leicht konisches Auflager 12 auf. Dieses geht in eine Auslenkschräge 11 über. Die Auslenkschräge 11 bildet den Abschluss des Verbindungszapfens 10.

Der Verbindungszapfen 10 kann in eine Befestigungshülse 20 eingeführt werden, die im Einzelnen in der Fig. 2 dargestellt ist. Die Befestigungshülse 20 kann ebenso wie der Verbindungszapfen 10 aus einem Kunststoffteil (beispielsweise einem Spritzgussteil) gefertigt sein.

Die Befestigungshülse 20 gemäss Fig. 2 weist einen in Längsrichtung verlaufenden Längsschlitz 34 auf. Dieser Längsschlitz 34 erstreckt sich über die gesamte Höhe der Befestigungshülse 20 und ist lediglich in einem Teilbereich mittels eines Spannelementes 29 überbrückt. Das Spannelement 29 ist bandartig ausgebildet und einstückig an die Befestigungshülse angespritzt. Neben dem Längsschlitz 34 besitzt die Befestigungshülse 20 noch wenigstens einen weiteren Längsschlitz, so dass von der Befestigunghülse 20 Haltefedern 21 abgeteilt sind. Die Haltefedern 21 sind an ihrer Außenseite mit einer Zahnung 22 versehen. Die Zahnung 22 läuft an dem in der Fig. 2 untenliegenden Ende der Befestigungshülse 20 in einer zur Mittellängsachse der Befestigungshülse 20 geneigten Auflaufschräge 35 aus. An dem oberen Ende der Befestigungshülse 20 ist ein Passbund 23 vorgesehen. Der Passbund 23 verläuft, entsprechend der Unterteilung, die durch die Längsschlitze 34 bewirkt ist, segmentartig ringförmig um die Mittellängsachse der Befestigungshülse 20. An den Passbund 23 schliesst sich ein Auflageflansch 24 an. Dieser Auflageflansch 24 ist gegenüber dem Passbund 23 durchmesservergrössert. Am freien Ende der Befestigungshülse 20 schliesst sich ein Federelement 25 an den Auflageflansch 24 an. Das Federelement 25 steht über den Auflageflansch 24 vor und läuft ebenso wie der Passbund 23 und die Mittellängsachse der Befestigungshülse 20 um.

Die Befestigungshülse 20 umschliesst eine Aufnahme, in die der Verbindungszapfen 10 eingesteckt werden kann, wie dies später noch näher erläutert wird. Diese Aufnahme wird im Wesentlichen von den Haltefedern 21 gebildet. Im Bereich der freien Enden der Haltefedern 21 sind Rastelemente 26 gebildet. Diese Rastelemente 26 gehen, der Aufnahme der Befestigungshülse 20 zugekehrt, in eine Flanke 27 über, die gegenüber der Mittellängsachse der Befestigungshülse 20 geneigt ist. An die Flanke 28 schliesst sich eine Innenwandung 28 an, die über eine Formfläche 30 in eine durchmesservergrösserte Pressfläche 31 übergeht. Die Pressfläche 31 geht in einen Absatz 32 über. Zwischen der Pressfläche 31 und dem Absatz 32 ist ein schroffer Übergang gebildet.

Der Absatz 32 schliesst mit einer Erweiterung 33 ab, die als Einführhilfe für den Verbindungszapfen 10 dient.

Zum Fügen des Montageelementes wird der Verbindungszapfen 10 in die Befestigungshülse 20 eingeschoben. Dabei gleitet die Auslenkschräge 11 auf die Erweiterung 33 und den Absatz 32 auf. Aufgrund der Geometrieverhältnisse wird die lichte Weite des Längsschlitzes 34 im Bereich der Auflaufschräge 35 dann verkleinert. Dementsprechend vergrössert sich die lichte Weite des Längsschlitzes 34 im Bereich des Auflageflansches 24. Wenn der Verbindungszapfen 10 nun weiter in die Befestigungshülse 20 eingeschoben wird, dann wird das Spannelement 29 quer zur Längserstreckung der Befestigungshülse 20 gedehnt. Die Dehnung erfolgt dabei zumindest teilweise federelastisch. Wenn das Spannelement 29 in den Bereich der Rastnut 15 gelangt, so wirkt sich die Federelastizität derart aus, dass die Halteschenkel 21 im Bereich der Auflaufschräge 35 der Befestigungshülse 20 auseinanderklappen. Dementsprechend klappt die Befestigungshülse im Bereich des Auflageflansches 24 radial nach innen, wodurch sich der Absatz 32 der Befestigungshülse 20 in die Rastnut 15 einschiebt. Wenn der Verbindungszapfen 10 weiterbewegt wird, so gleitet der Absatz 32 über Schrägflächen der Rastnut 15 gegen den Anschlag 14. Der Anschlag 14 behindert zusammen mit dem Absatz 32 die weitere Einsetzbewegung des Verbindungszapfens 10 in die Befestigungshülse 20. Somit ist eine Vorsteckposition erreicht. In dieser Vorsteckposition verspannt das Spannelement 29 aufgrund seiner federelastischen Ausbildung den Absatz 32 gegenüber dem Anschlag 14. Hierdurch wird sichergestellt, dass die Halteschenkel 21 nicht unbeabsichtigt aufeinanderzubewegt werden können, wodurch letztendlich die von dem Absatz 32 und dem Anschlag 14 gebildete formschlüssige Verbindung aufgehoben werden würde.

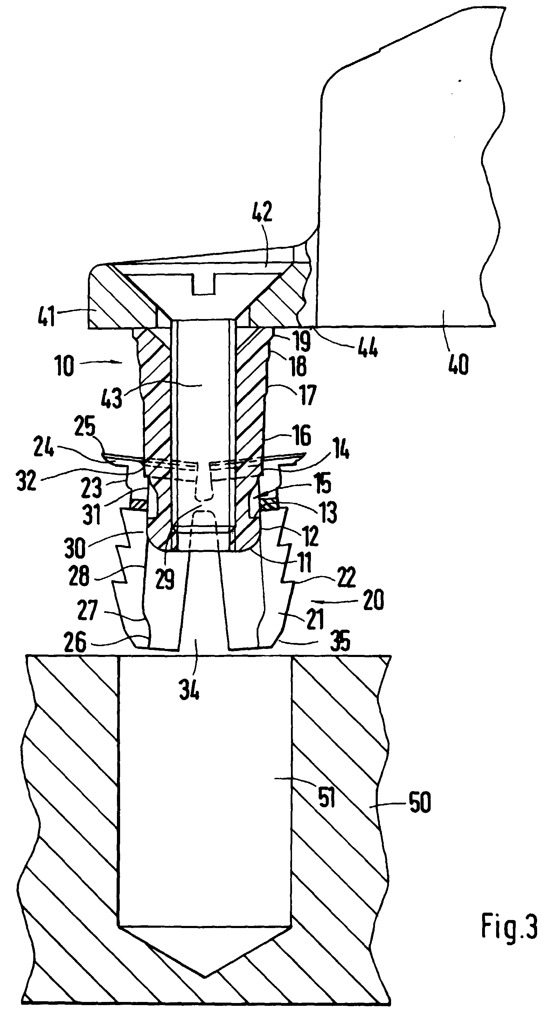

Wie die Fig. 3 weiter erkennen lässt, ist an dem Verbindungszapfen 10 ein Befestigungsteil 40, beispielsweise ein Möbelbeschlagteil festgemacht. Das Befestigungsteil 40 weist einen auskragenden Flansch 41 auf, der von einer Bohrung 42 durchsetzt ist. In diese Bohrung 42 kann eine Befestigungsschraube 43 eingesteckt und in die Befestigungsaufnahme 10.1 des Verbindungszapfens 10 eingeschraubt werden. Die Befestigungsschraube 43 legt dabei das Befestigungsteil 40 derart an den Verbindungszapfen 10 fest, dass eine untere Anlagefläche des Flansches 41 auf der zugewandten Endfläche des Endstückes 19 des Verbindungszapfens 10 aufliegt.

Die aus Befestigungsteil 40, Verbindungszapfen 10 und Befestigungshülse 20 bestehende Einheit kann an ein Werkstück 50 befestigt werden. Das Werkstück 50 ist mit einer Bohrung, vorliegend einer Sacklochbohrung 51 versehen. Zur Montage des Befestigungsteiles 40 wird die Befestigungshülse 20 in die Sacklochbohrung 51 eingesetzt. Dabei gleiten zunächst die Auflaufschrägen 35 der Befestigungshülse 20 an dem Bohrungtritt der Sacklochbohrung 51 auf. Beim Aufgleiten der Auflaufschrägen 35 werden die Halteschenkel 21 radial nach innen ausgelenkt. Infolge dieser Auslenkung hebt sich die formschlüssige Verbindung ( Absatz 32 - Anschlag 14) zwischen dem Verbindungszapfen 10 und der Befestigungshülse 20 auf.

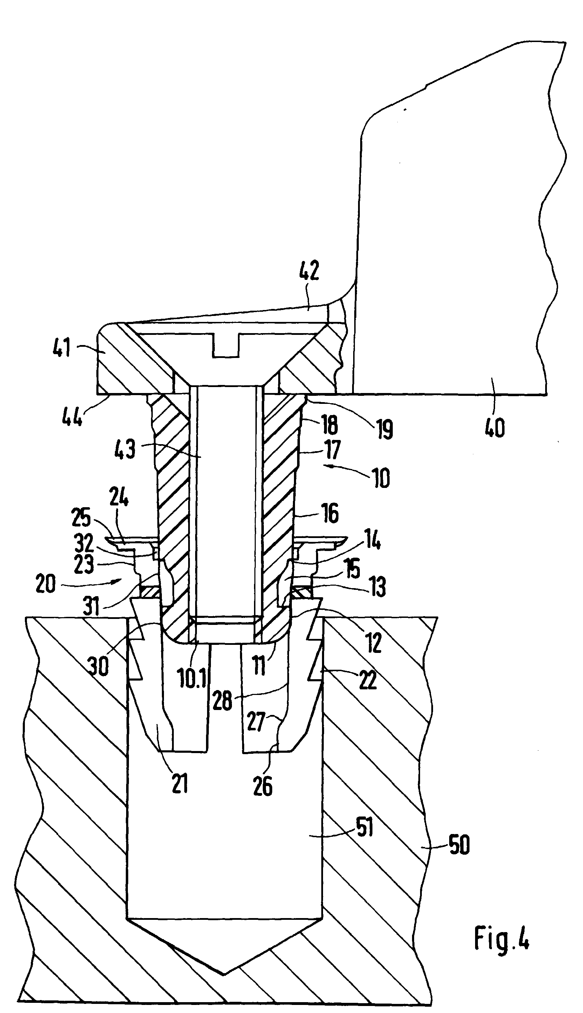

Wie die Fig. 4 veranschaulicht, kann die Befestigungshülse 20 nun kontinuierlich in die Sacklochbohrung 51 eingesetzt werden, wobei die Zahnung 22 der Befestigungshülse 20 an der Innenwandung der Sacklochbohrung 51 vorbeigeführt wird. Die erforderliche Fügekraft hierzu wird beispielsweise über das Befestigungsteil 40 eingeleitet. Damit nun verhindert ist, dass der Verbindungszapfen 10 in die Befestigungshülse 20 eingeschoben wird, bevor diese vollständig in die Sacklochbohrung 51 eingesteckt ist, wird der Verbindungszapfen 10 mittels der Auslenkschräge 11 an der geneigten Formfläche 30 der Befestigungshülse 20 gehalten. Die an der Formfläche 30 erzeugte Haltekraft ist dabei grösser als die zum Fügen der Befestigungshülse 20 in die Sacklochbohrung 51 erforderliche Fügekraft. Wenn nun die Befestigungshülse 20 vollständig in die Sacklochbohrung 51 eingesteckt ist, so legt sich der Auflageflansch 24 im Bereich um den Bohrungseintritt der Sacklochbohrung 51 auf die Oberseite des Werkstückes 50 auf. Nun kann die Fügekraft erhöht werden, so dass sich der Verbindungszapfen 10 über die Formfläche 30 hinwegschiebt. Beim Einschieben des Verbindungszapfens 10 werden nun die Halteschenkel 21 radial nach außen verspreizt. Dies wird im Einzelnen dadurch bewirkt, dass die Gleitfläche 16 auf die Innenwandung 28 der Befestigungshülse 20 aufläuft. Die Zahnung 22 kann dabei ein Stück weit in die Oberfläche der Innenwandung der Sacklochbohrung 51 eindringen und sich hier widerhakenartig verkrallen. Wenn der Verbindungszapfen 10 mit seiner Auflaufschräge 11 an der Innenwandung 28 der Befestigungshülse 20 vorbeigeführt ist, gelangt er in Eingriff mit der Flanke 27. Dann werden die Halteschenkel 21 im Bereich ihrer freien Enden um einen virtuellen Drehpunkt nach außen geschwenkt. Der virtuelle Drehpunkt ist dabei in etwa in Höhe des ersten Zahnes der Zahnung 22 angeordnet. Nachdem das Außenlager 12 des Verbindungszapfens 10 die Rastelemente 26 der Halteschenkel 21 passiert hat, schnappen diese Rastelemente 26 in die Rastnut 15 ein. Gleichzeitig legen sich die Stirnseiten der Halteschenkel 21, die in etwa rechtwinklig zur Mittellängsachse der Befestigungshülse 20 stehen, an die steilen Rastflanken 13 des Verbindungszapfens 10 an. Damit wird dann verhindert, dass der Verbindungszapfens 10 aus der Aufnahme der Befestigungshülse 20 herausgezogen werden kann, wodurch eine feste Anbindung des Befestigungsteiles 40 an dem Werkstück 50 möglich wird.

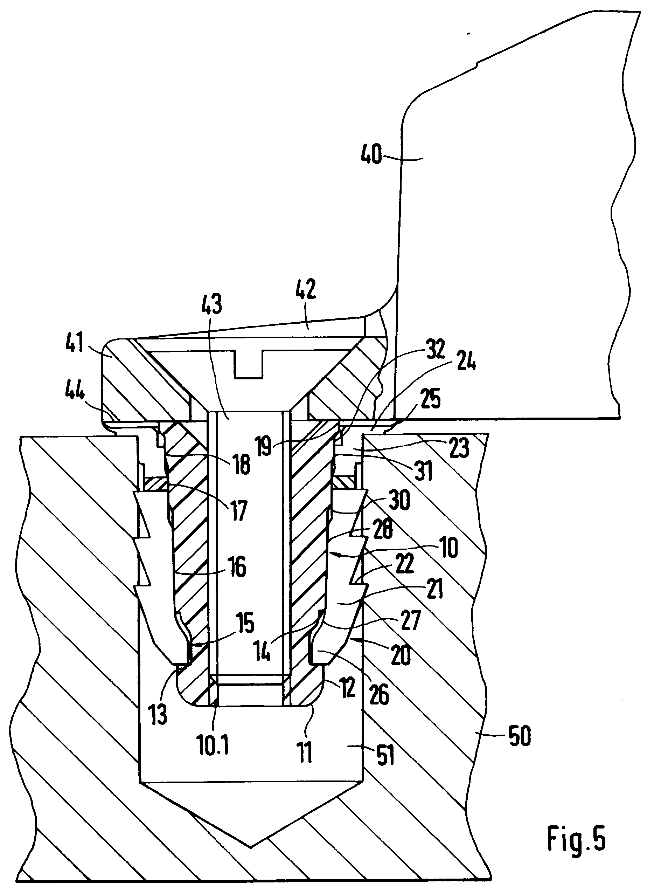

Um ein eventuelles Spiel auszugleichen, das im Bereich der Rastnut 15 zwischen dem Verbindungszapfen 10 und der Befestigungshülse 20 auftritt, legt sich das Federelement 25 an der Anlagefläche 44 des Befestigungsteiles 40 an. Damit wird das Befestigungsteil 40 in Achsrichtung des Verbindungszapfens 10 gegenüber dem Werkstück 50 verspannt. Die Endmontagestellung des Montageelementes lässt sich im Einzelnen der Fig. 5 entnehmen.

Die Befestigungshülse 20 weist im Bereich ihres Passbundes 23 einen Außendurchmesser auf, der geringfügig grösser gewählt ist, als der Innendurchmesser der Sacklochbohrung 51. Beispielsweise kann die Sacklochbohrung 51 ein Durchmessermass von 8mm, der Passbund 23 ein Durchmessermass von 8,1-8,2mm aufweisen. Aufgrund dieser masslichen Auslegung wird der Passbund 23 bei gefügter Befestigungshülse 20 radial nach innen verformt. Diese radiale Verformung bewirkt, dass der Passbund 23 an dem Bund 18 des Verbindungszapfens 10 angepresst wird. Über diese Verpressung wird eine wackelfreie Verspannung des Verbindungszapfens 10 bewirkt.

Es hat sich gezeigt, dass die Erstreckung des Rastelementes 26 in Richtung der Mittellängsachse des Verbindungszapfens 10 abhängig vom verwendeten Kunststoff mindestens 0,2 mm bis 1 mm betragen muss, damit eine ausreichende Abschersicherheit gegeben ist.

## Patentansprüche

1. Montageelement mit einem Verbindungszapfen und einer Befestigungshülse, wobei die Befestigungshülse in einer Bohrung eines Werkstückes festlegbar ist,
dadurch gekennzeichnet,
dass der Verbindungszapfen (10) in einer Aufnahme der Befestigungshülse (20) in einer Vorsteck-Position gehalten ist,
dass der Verbindungszapfen (10) einen Anschlag (14) aufweist, der in der Vorsteck-Position an einem Absatz (32) der Befestigungshülse anliegt und an diesem in Richtung der Einschiebebewegung des Verbindungszapfens (10) in die Befestigungshülse (20) anliegt, und
dass der Verbindungszapfen (10) und/oder die Befefestigungahülse (20) eine Auslösevorrichtung (35,29) aufweist, mittels der die Verbindung zwischen dem Verbindungszapfen (10) und der Befestigungshülse (20) aufhebbar ist.

2. Montageelement nach Anspruch 1,
dadurch gekennzeichnet,
dass der Anschlag (14) formschlüssig an dem Absatz (32) gehalten ist.

3. Montageelement nach Anspruch 1 oder 2,
dadurch gekennzeichnet,
dass die Befestigungshülse (20) im Bereich des dem vorgesteckten Verbindungszapfen (10) abgekehrten freien Ende wenigstens zwei abgeteilte Halteschenkel (21) aufweist, die in der Vorsteck-Position auseinandergespreizt sind, und
dass die Halteschenkel (21) im Bereich ihrer freien Enden mit einer Auflaufschräge (35) versehen sind.

4. Montageelement nach Anspruch 3,
dadurch gekennzeichnet,
dass die Halteschenkel (21) um virtuelle Drehpunkte aus ihrer Vorsteck-Position in eine Stellposition verschwenkbar sind, wobei die Verbindung zwischen der Befestigungshülse (20) und dem Verbindungszapfen (10) in der Stellposition aufgehoben ist.

5. Montageelement nach einem der Ansprüche 1 bis 4,
dadurch gekennzeichnet,
dass die Befestigungshülse (20) ein Spannelement (29) aufweist, das die Befestigungshülse (20) mit ihrem Absatz (32) gegen den Anschlag (14) des Verbindungszapfens (10) verspannt.

6. Montageelement nach Anspruch 5,
dadurch gekennzeichnet,
dass die Befestigungshülse (20) zumindest bereichsweise mit einem Längsschlitz (34) versehen ist,
dass der Längsschlitz (34) mittels des Spannelementes (29) überbrückt ist, und
dass das Spannelement (29) quer zur Längserstreckung des Längsschlitzes dehn- oder verstellbar ist.

7. Montageelement nach einem der Ansprüche 1 bis 6,
dadurch gekennzeichnet,
dass die Befestigungshülse (20) als Spritzgussteil ausgebildet ist, an dem das Spannelement (29) einstückig angeformt ist.

8. Montageelement nach einem der Ansprüche 1 bis 7,
dadurch gekennzeichnet,
dass der Verbindungszapfen (10) bei aufgehobener Verbindung zwischen Verbindungszapfen (10) und Befestigungshülse (20) an einer Formfläche (30) der Befestigungshülse (20) gehalten ist, wobei die an der Formfläche (30) erzeugte Haltekraft grösser ist, als die zum Einsetzen der Befestigungshülse (20) in die Bohrung (51) des Werkstückes (50) erforderliche Fügekraft.

9. Montageelement nach einem der Ansprüche 1 bis 8,
dadurch gekennzeichnet,
dass der Verbindungszapfen (10) einstückig an ein mit dem Werkstück (50) zu verbindenden Befestigungsteil (40) angeformt ist.

10. Montageelement nach einem der Ansprüche 1 bis 9,
dadurch gekennzeichnet,
dass die Befestigungshülse (20) an ihrem dem Befestigungsteil (40) zugewandten Endbereich ein Federelement (25) aufweist, das gegen eine Anlagefläche (44) des Befestigungsteiles (40) in Achsrichtung des eingedrückten Verbindungszapfen (10) verspannt ist.

11. Montageelement nach einem der Ansprüche 1 bis 10,
dadurch gekennzeichnet,
dass die Befestigungshülse (20) einen Passbund (23) aufweist, dessen Aussenabmesser gegenüber dem Innendurchmesser der Bohrung (51) ein Übermass aufweist,
dass die Befestigungshülse (20) im Bereich ihres Passbundes (23) an der Bohrung (51) radial nach innen verformbar ist, und
dass der in der Aufnahme der Befestigungshülse (20) eingesteckte Verbindungszapfen (10) im Bereich des Passbundes (23) infolge der Verformung der Befestigungshülse (20) geklemmt gehalten ist.
